# EUROPEAN PATENT APPLICATION

(11) **EP 1 513 048 A1**
(43) Date of publication of application: **09.03.2005**
(21) Application number: 04021144.3
(22) Date of filing: 06.09.2004
(51) Int. Cl.: G06F 1/16

(54) **A visor assembly**

(30) Priority: 05.09.2003 GB 0320803
(71) Applicant: McSorley, James, Armagh, BT60 4EP (GB)
(72) Inventor: McSorley, James, Armagh, BT60 4EP (GB)
(74) Representative: O'Connell, Maura, Dr.

(57) **Abstract**

The present invention relates to a visor assembly (10; 110) for use with a computer monitor (16) or the like, the visor assembly (10; 110) comprising a pair of supports (18; 118; 218) between which a visor panel (12; 112) is pivotally mounted, each support (18; 118; 218) being connectable to the computer monitor (16), and in particular directly to a screen (14) of the monitor (16), by means of a suction cup (22; 122; 222) or the like, in order to facilitate ease of removal of the visor assembly (10; 110) as desired.

## Description

The present invention relates to a visor assembly for use with a computer monitor, in particular a visor assembly for use with a screen of a computer monitor.

It is known in the prior art for computer monitors to be provided with glare reducing visors. Such visors are generally attachable to the sides of the computer monitor to reduce the glare on the screen of the monitor. The visors tend to be permanently secured to the sides, top and/or front of the monitor using a suitable bonding agent. Even if the visor is hinged, so that it can be folded away to some extent when not required, the visor is still present on the sides, top and/or front of the computer monitor as a bulky attachment. Although effective as glare reducing visors, use of a bonding agent to secure the visor has several disadvantages, the most problematic being that the visor is difficult to remove altogether from the computer monitor, should the need arise.

It is also known to attach a visor to a computer monitor by securing a Velcro (Trade Mark) strip or the like to the sides, top and/or front of the computer monitor, again using a suitable bonding agent. Using Velcro (Trade Mark), the visor can be removed from the computer monitor, however it is still necessary to have unsightly corresponding Velcro strips permanently adhered to the computer monitor and visor.

Furthermore, since visors known from the prior art tend to be secured to the sides, top and/or front of the monitor, they are not generally suitable for use with flat screen monitors, nor with monitors having a particularly rounded side or top construction. Visors designed to be specifically secured to the front of the monitor, i.e. the computer bezel, would not be suitable for use with, for example, a bezel having a particularly rounded or unusual construction. The proper and effective operation of such visors is therefore dependent on the computer monitor being limited to being shaped and dimensioned according to conventional standards. Such visors are obviously not suitable for attaching directly to the screen of a computer monitor, not only because the indicia present on the screen would be obstructed, but also because a bonding agent should not be used directly on the screen. In this regard, known visors are relatively limited in their use.

It is therefore an object of the present invention to mitigate the disadvantages of the prior art.

It is a further object to provide a visor assembly, the use of which is less restricted by the size or shape of the computer monitor.

According to the present invention, there is provided a visor assembly for a monitor having a display area, said assembly comprising a support; and a visor panel pivotally mounted to the support, said support being arranged to be removably secured to the monitor.

Preferably, the support is arranged to be removably secured to the display area.

Preferably, the support comprises at least one adhesive member.

Preferably, the support comprises at least one suction cup for securing the visor assembly to the monitor.

Preferably, the support comprises a shaft having a central axis about which the visor panel is arranged to pivot.

Preferably, the support comprises a substantially L-shaped coupling comprising a first leg and a second leg, of which the shaft forms the first leg, and the adhesive member is connected to the second leg.

Preferably, the second leg and the adhesive member are connected using a ball and socket arrangement.

Preferably, the visor panel is provided with a sleeve which receives, in use, the shaft.

Preferably, the visor assembly comprises locking means adapted to releasably fix the visor panel relative to the support.

Preferably, the locking means comprises a plurality of detents on the shaft, and a pawl engagable with the detents.

Preferably, the support comprises a pair of adhesive members, the pair of adhesive members preferably comprising a pair of suction cups.

Preferably, the pair of adhesive members are disposed substantially orthogonally to one another, the pair of adhesive members preferably comprising a pair of suction cups, which are adapted to be removably secured about an edge of the monitor.

Preferably, the visor panel is concave in form.

Preferably, the visor panel comprises a tray.

Preferably, the tray comprises at least one well for receiving a writing implement.

Preferably, the visor panel comprises retaining means for securing stationary to the visor panel.

Preferably, the at least one adhesive member, which is preferably a suction cup, is substantially transparent or translucent.

As used herein, the term "adhesive member" is intended to mean any component that can be secured directly to a surface, and is particularly intended to mean a member comprising an adhesive glue thereon or a suction cup or the like.

As used herein, the term "sleeve" is intended to mean an object or component which surrounds or partially surrounds another object, in particular a shaft, and which permits relative rotation between the two.

An embodiment of the present invention will now be described with reference to the accompanying drawings, in which:
Figure 1 is a perspective view of two visor assemblies according to a first embodiment of the present invention, each visor assembly comprising a pair of supports, each support having a free end arranged to be removably secured to a screen of a computer monitor; and a visor panel pivotally mounted to a securing end of the supports;
Figure 2 is a perspective view of one of the visor panels of Figure 1;
Figure 3a is a perspective view of a portion of the screen and computer monitor of Figure 1, showing two suction cups having their free ends releasably affixed to the screen;
Figure 3b is an exploded front elevation of one of the visor panels of Figure 1 showing two suction cups and associated L-shaped couplings, the L-shaped couplings being arranged to enable the visor panel to pivot about a central axis X-X of the support;
Figure 4 is a longitudinal section through a portion of one of the visor panels mounted substantially orthogonally to the screen;
Figure 5 illustrates a perspective view of a second embodiment of a visor assembly according to the present invention;
Figure 6 illustrates a sectioned side elevation of a support forming part of the visor assembly of Figure 5;
Figure 7 illustrates a perspective view of the support of Figure 6;
Figure 8 illustrates a perspective view of a visor panel forming part of the visor assembly of Figure 5; and
Figure 9 illustrates a side view of a further embodiment of a support which may be used in place of the support illustrated in Figures 6 and 7.

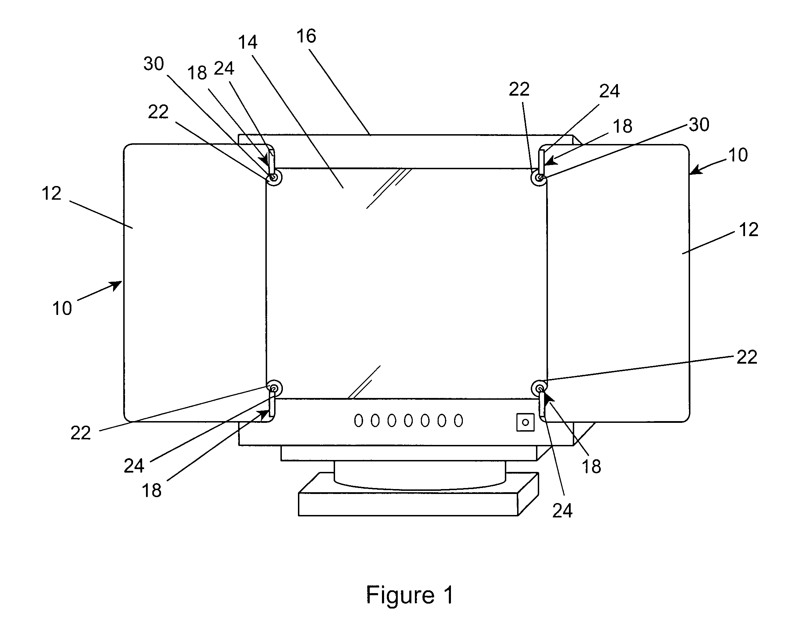

Referring now to Figures 1 to 4 of the accompanying drawings, there is illustrated two visor assemblies 10 according to a first embodiment of the present invention. Each visor assembly 10 comprises a visor panel 12 mounted to a display area or screen 14 of a computer monitor 16 by a pair of supports 18. In particular, each of the visor panels 12 is pivotally mounted to the respective pair of supports 18, as will be described in more detail hereinafter. Each of the supports 18 has a free end 23 arranged, in use, to be removably secured to the screen 14.

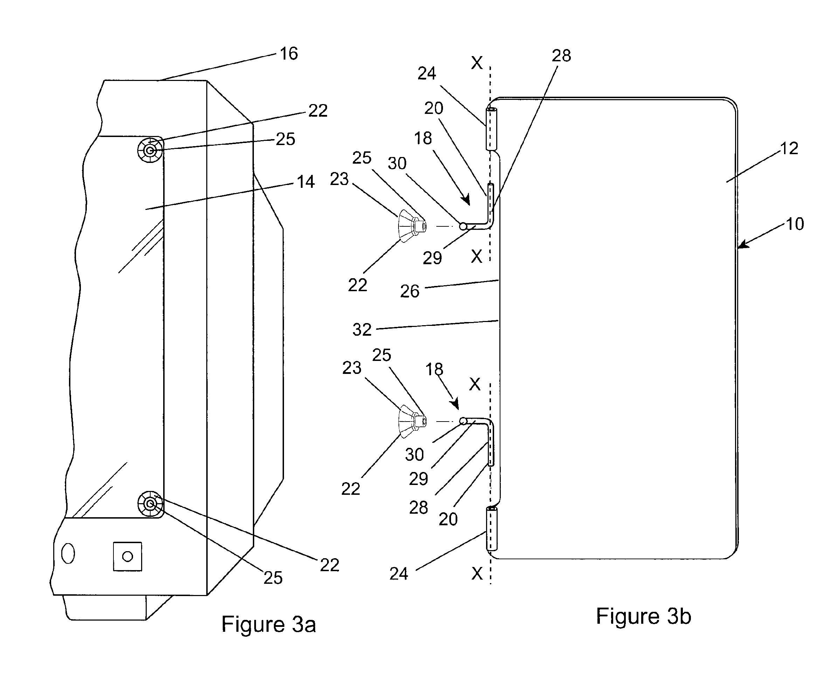

Referring now to Figure 3b in particular, the support 18 preferably includes an adhesive member in the form of a suction cup 22 for securing the visor assembly 10 to the screen 14. The suction cup 22 preferably has a substantially standard shape of a truncated hollow cone. The suction cup 22 is therefore shaped and dimensioned so that, as the support 18 is pushed against the screen 14, the free end 23 is affixed to the screen 14 to releasably secure the support 18 to the screen 14. The support 18, and in particular the suction cups 22, are preferably substantially transparent or translucent, in order to avoid obscuring that portion of the screen 14 to which the suction cups 22 are adhered.

Each of the supports 18 comprises a substantially L-shaped coupling 20, one leg of which is defined by a shaft 28 having a central axis X-X about which the visor panel 12 is pivotable, and a second leg in the form of a lug 29, the otherwise free end of which lug 29 terminates in a ball 30. The suction cup 22 of the support 18 has a securing end 25 which is, in use, adapted to receive the ball 30 of the L-shaped coupling 20. In this manner, the securing end 25 of the otherwise free end 30 of the L-shaped coupling 20 comprises a ball and socket arrangement connecting the L-shaped coupling 20 and the suction cup 22. It will of course be understood that any other suitable means (not shown) may be used in place of the ball and socket arrangement, in order to secure the respective suction cup 22 to the coupling 20.

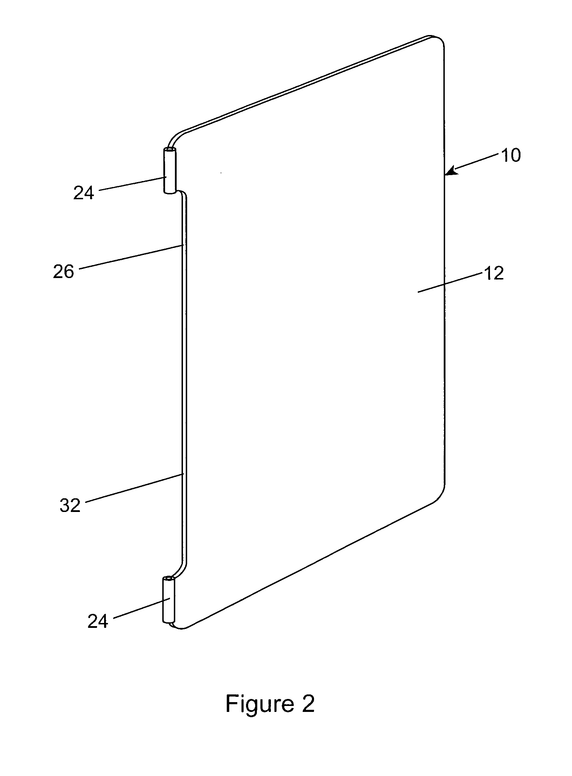

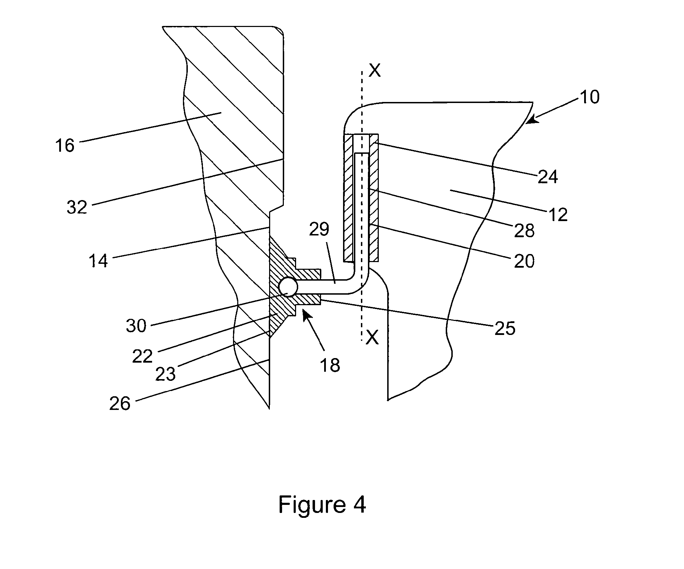

Referring now to Figures 2 and 3b, the visor panel 12 is shown to comprise two spaced apart sleeves 24 disposed along an edge 32 of the visor panel 12. A recess 26 is preferably provided along the edge 32 between the two sleeves 24. Each of the sleeves 24 is adapted to receive the shaft 28 of the L-shaped coupling 20 as shown for example in Figure 4. The sleeve 24 preferably engages the shaft 28 to the extent that a certain amount of friction exists between the shaft 28 and the sleeve 24, yet the shaft 28 is still easily moveable within the sleeve 24. The visor panels 12 are preferably self-retaining under friction. In this manner, the visor panels 12 are conveniently moveable about the central axis X-X, and once in the desired location, are retained in that position.

Alternatively, the support 18 is integral with the visor panel 12 (this arrangement is not shown in the drawings). In this case, the support 18 would then preferably comprise a live hinge (not shown) adjacent a securing end (not shown) of the support 18. The live hinge would be arranged to enable the visor panel 12 to be pivotable about the support 18. It will be appreciated that if the visor panels 12 are not self-retaining under friction, locking means (not shown) may optionally be provided to releasably fix the visor panel 12 in any desired position about the central axis X-X of the support 18.

Thus, in use, each of the visor assemblies 10 may be assembled as follows. The shaft 28 of each of the L-shaped couplings 20 is inserted into the respective sleeve 24, as shown for example in Figures 3b and Figure 4. The L-shaped coupling 20 is then connected to the suction cup 22 by means of the ball and socket arrangement.

Each of the visor panels 12 is then separately attached to the screen 14 by pressing the free end 23 of each of the supports 18 against the screen 14 as shown for example in Figure 4. Each of the supports 18 then removably secures the visor panels 12 in place, as hereinbefore described. Since the supports 18 are preferably conveniently in the form of transparent suction cups 22, the supports 18 do not obstruct the view of any indicia (not shown) on the screen 12.

Once assembled, the visor panels 12 are conveniently pivotable about a central axis X-X of each of the supports 18. By gripping one of the visor panels 12, a user (not shown) can pivot the visor panel 12 about the central axis X-X in order to move the visor panel 12 into the desired position. Thus, each of the visor panels 12 is therefore conveniently moveable through an angle of approximately 180° about the central axis X-X. Each of the visor assemblies 10 is therefore moveable between a first state, wherein the visor panels 12 are substantially flush against the sides of the computer bezel as shown in Figure 1, and a second, storage state (not shown) wherein the visor panels 12 are substantially flush against, or disposed parallel to, the screen 14. In this manner, the visor assemblies 10 can be adjusted as desired according to the light conditions in which the user is working.

In order to remove the visor panels 12 from the computer monitor 16, the user simply has to pull the supports 18 away from the screen 12. In this manner, the whole of each of the visor assemblies 10 is conveniently removable and replaceable as desired.

Since the visor panels 12 are preferably affixed to the screen 14 of the computer monitor 16, the shape and size of the computer monitor 16 itself is not important. The visor assembly 10 of the present invention can advantageously be used with any shape of computer monitor, computer bezel and computer screen, from a computer having a rounded CRT monitor to a flat LCD monitor.

It will be appreciated that, for example, the shape and dimensions of the visor panels 12 may be altered as desired, to suit different computer shapes and sizes. The positioning and number of the sleeves 24 provided on the visor panels 12 may also be adjusted as desired.

Furthermore, although the shafts 28 of the pair of couplings 20 used with one of the visor assemblies 10 are shown to point in opposite directions in use (as shown in Figure 3b for example), it will be appreciated that the couplings 20 may be positioned so that the shafts 28 point in the same direction in use. For example, it may be desirable to position both of the couplings 20 so that, in use, each of the sleeves 24 of the visor assembly 10 bears down on the lug 29 which terminates in the ball 30. In this manner, the couplings 20 may be used to provide support to the visor assembly 10.

It will be further appreciated that the visor assembly 10 does not have to be assembled as previously described herein, and any other assembly method may be employed. It will also be apparent that the visor panels 12 may be adapted to be pivotable about the central axis X-X by any suitable means other than by using the arrangements previously described herein.

Although it is not essential to the invention, it will be further apparent that the visor panels 12 may include a box (not shown) or the like for holding small objects thereby providing the visor assembly 10 with space for storage.

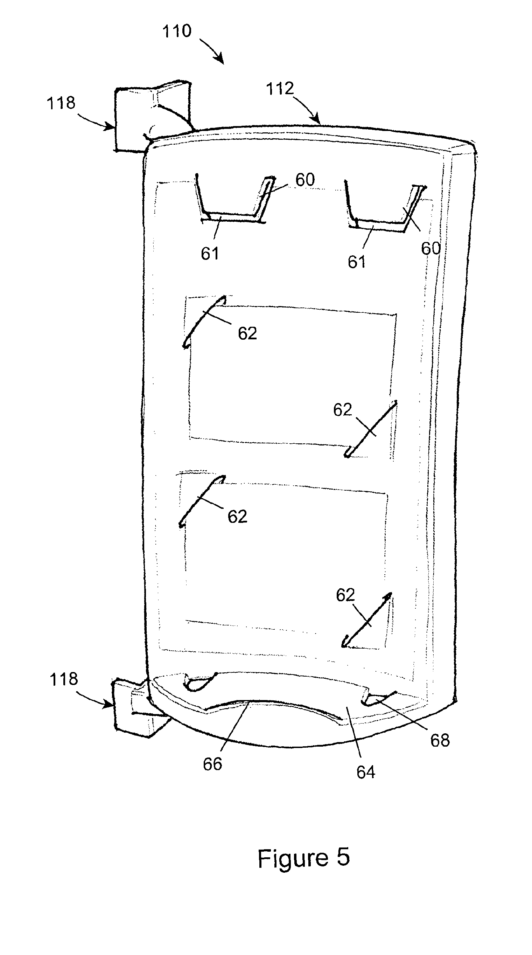

Referring now to Figures 5 to 7, there is illustrated an alternative embodiment of a visor assembly according to the present invention, generally indicated as 110. In this alternative embodiment, like components have been accorded like reference numerals, and unless otherwise stated, perform a like function.

The visor assembly 110 comprises a visor panel 112 pivotally mounted to a pair of supports 118, which are adapted, as will be described hereinafter, to enable the visor assembly 110 to be removably secured about a computer monitor (not shown) or the like. It will also be apparent from the following description that the supports 118 could be adapted for use with the visor panel 12 of the first embodiment, and conversely that the visor panel 112 of the second embodiment could be adapted for use with the supports 18 of the first embodiment.

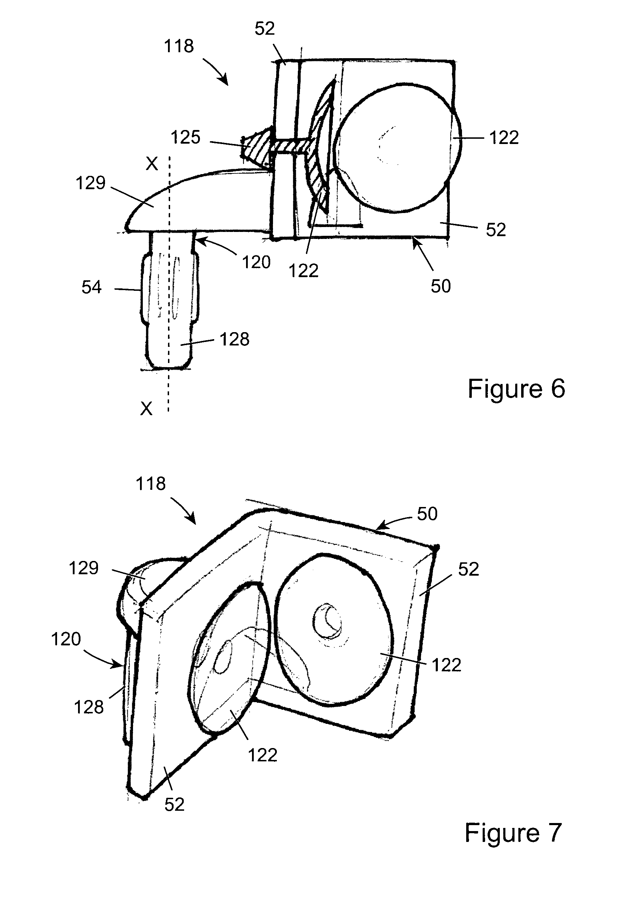

Referring now in particular to figures 6 and 7, the visor panel 112 is pivotal about an axis X-X of the respective support 118, which is also provided with a pair of adhesive members in the form of suction cups 122 which enable the support 118 to be adhered to a computer monitor (not shown), as will be described hereinafter in detail. The support 118 comprises a bracket 50 consisting of a pair of arms 52 preferably disposed substantially orthogonally to one another, each arm 52 carrying a respective suction cup 122, each of which has a securing end 125 which is passed through the respective arm 52 in order to secure the suction cup 122 in place. The support 118 further comprises an L-shaped coupling 120 comprising a first leg in the form of a shaft 128, and a second leg in the form of a lug 129 which is connected to the bracket 50. Each support 118 is secured to the visor panel 112 by means of the shaft 128, such that the visor panel 112 may be hinged about the axis X-X of the shaft 128, in order to enable the position of the visor panel 112 to be varied when the visor assembly 110 is secured to a computer monitor (not shown).

Referring to figure 6, the shaft 128 is provided with a plurality of detents 54 thereon, which co-operate with the visor panel 112 as will be described hereinafter, in order to enable the visor panel 112 to be fixed at various positions relative to a computer monitor (not shown), when the assembly 110 is secured in place.

Referring back to Figure 5, the visor panel 112 is provided with at least one, and in the embodiment illustrated a pair of tabs 60 which each define a slot 61 between the tabs 60 and the visor panel 112, into which a sheet of paper (not shown) or the like may be inserted, in order to retain same on the visor panel 112, for example for use in copy typing. The visor panel 112 is also provided with two sets of diagonally opposed pockets 62 again for receiving and securing, for example, paper, a photo, or other items of stationery or the like. In order to improve this retaining function, the visor panel 112 is preferably concave in form, such that any items (not shown) held by the tabs 60 or pockets 62 will assume this concave form, thereby stiffening such paper or card items (not shown), so helping to retain same on the visor panel 112. It will of course be appreciated that the tabs 60 and pockets 62 could be replaced with any other suitable equivalent, which retains the functionality of same.

The visor panel 112 is also preferably provided with a tray 64 projecting outwardly therefrom, for holding other items of stationery or the like, for example paper clips, etc. The tray 64 is therefore provided with an upstanding lip 66 in order to prevent such objects from rolling off the tray 64. The tray 64 is also preferably provided with at least one, and in the embodiment illustrated, a pair of wells 68 extending downwardly into the tray 64, which wells 68 are shaped and dimensioned to receive a writing implement (not shown) such as a pen or the like therein, in order to retain same on the visor panel 112.

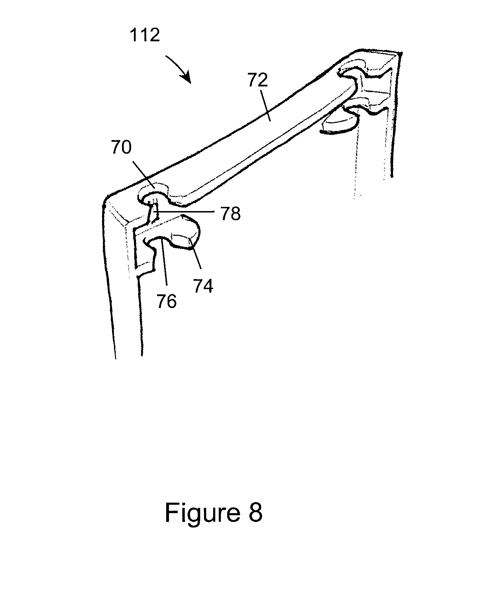

Turning then to Figure 8, the visor panel 112 is provided with an aperture 70 in a sidewall 72 thereof, in addition to a mount 74 located in spaced relation to the sidewall 72, which mount 74 is provided with an aperture 76 which corresponds in shape and dimension to the aperture 70. In use, the shaft 128 of the support 118 is pressed into engagement within the apertures 70, 76 which are dimensioned, relative to the shaft 128, to enable a pivoting fit between the visor panel 112 and the support 118. The plurality of detents 54 on the shaft 128 are therefore located between the sidewall 72 and the mount 74, and thus prevent the visor panel 112 from sliding off the shaft 128 of the support 118. The visor panel 112 is further provided with a pawl 78 located such as to contact the detents 54 when the visor panel 112 is secured to the supports 118. The arrangement of the detents 54 and the pawl 78 allow the position of the visor panel 112 to be fixed or locked at various positions on the shaft 128, such as to allow the position of the visor panel 112, relative to a computer monitor (not shown), to be fixed at various orientations. Again it will be appreciated that any other suitable alternative arrangement could be used in place of the detents 54 and pawl 78, once the desired functionality is retained.

Thus in use the supports 118 are secured to the visor panel 112, and each of the supports 118 is then secured to a computer monitor (not shown). To this end, one of the suction cups 122 is pressed into engagement with a front bezel (not shown) of the monitor, with the remaining suction cup 122 being pressed into engagement with a side of the monitor, in order to secure the visor assembly 110 thereto. The supports 118 therefore allow the visor assembly 110 to be releasably engaged with a computer monitor, without requiring any component to be permanently fixed to the computer monitor.

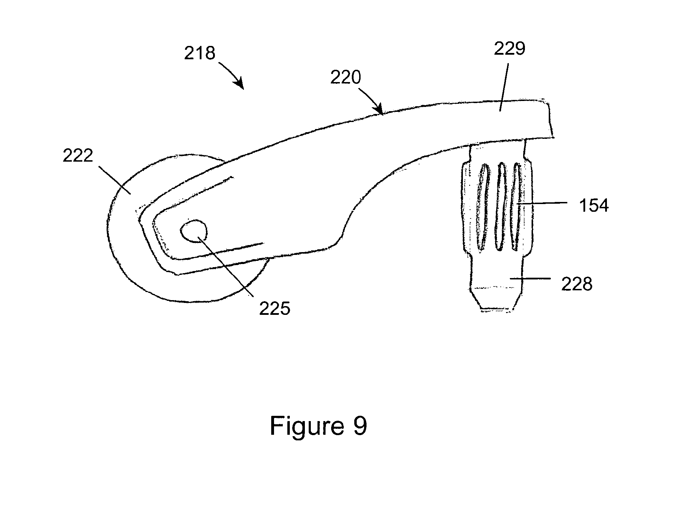

Referring now to Figure 9, there is illustrated a further embodiment of a support, generally indicated as 218, which is suitable for use with the visor panel 112. In this further embodiment, and unlike the support 118, the support 218 comprises a single adhesive member in the form of a suction cup 222 which will allow the support 218 to be adhered directly to a screen (not shown) of a monitor (not shown). The support 218 comprises a substantially L-shaped coupling 220 having a first leg in the form of a shaft 228, and a second leg in the form of a lug 229. The shaft 228 is provided with a plurality of detents 154 whose configuration and operation is the same as that of the detents 54 of the support 118. It will of course be apparent that the shaft 228 could be replaced with a substantially smooth shaft (not shown) for a friction fit with, for example, the sleeve 24 of the visor panel 12 of the first embodiment.

The single suction cup 222 includes a retaining end 225 which is passed through the lug 229 in order to secure the suction cup 222 to the coupling 220. It will of course be appreciated that the suction cup 222 could be secured to the coupling 220 by any other suitable means. As with the first embodiment, the support 218 enables the visor panel 112 to be adhered directly to a screen (not shown) of a computer monitor (not shown) or the like.

The present invention therefore provides a visor assembly 10; 110 which is easy to assemble and secure in place, and to subsequently remove. Furthermore, the visor assembly 10; 110 is suitably constructed and adapted so that it can be used with differently shaped computer monitors and screens (not shown). It will be appreciated that the supports 18; 118; 218 are shaped and dimensioned so that they can be removably affixed to any surface, for example by the use of the suction cups 22; 122; 222. The visor assembly 10; 110 therefore has the advantage over conventional visors in that no bonding agent or the like is required.

## Claims

1. A visor assembly (10; 110) for a monitor (16) having a display area (14), said assembly (10; 110) comprising a support (18; 118; 218); and a visor panel (12; 112) pivotally mounted to the support (18; 118; 218), said support (18; 118; 218) being arranged to be removably secured to the monitor (16).

2. A visor assembly (10; 110) according to claim 1, wherein the support (18; 118; 218) is arranged to be removably secured to the display area (14).

3. A visor assembly (10; 110) according to claim 1 or 2 wherein the support (18; 118; 218) comprises at least one adhesive member (22; 122; 222).

4. A visor assembly (10; 110) according to any preceding claim wherein the support (18; 118; 218) comprises at least one suction cup (22; 122; 222) for securing the visor assembly (10; 110) to the monitor (16).

5. A visor assembly (10; 110) according to any preceding claim wherein the support (18; 118; 218) comprises a shaft (28; 128; 228) having a central axis about which the visor panel (12; 112) is arranged to pivot.

6. A visor assembly (10; 110) according to claim 5, when dependent on claim 3 or 4, in which the support (18; 118; 218) comprises a substantially L-shaped coupling (20; 120; 220) comprising a first leg (28; 128; 228) and a second leg (29; 129; 229), of which the shaft (28; 128; 228) forms the first leg (28; 128; 228), and the adhesive member (22; 122; 222) is connected to the second leg (29; 129; 229).

7. A visor assembly (10; 110) according to claim 6 in which the second leg (29; 129; 229) and the adhesive member (22; 122; 222) are connected using a ball and socket arrangement.

8. A visor assembly (10; 110) according to any of claims 5 to 7 in which the visor panel (12; 112) is provided with a sleeve (24; 70, 76) which receives, in use, the shaft (28; 128; 228).

9. A visor assembly (10; 110) according to any preceding claim comprising locking means (24; 54, 78; 154) adapted to releasably fix the visor panel (12; 112) relative to the support (18; 118; 218).

10. A visor assembly (10; 110) according to claim 9, when dependent on any of claims 5 to 8, wherein the locking means (54, 78; 154) comprises a plurality of detents (54; 154) on the shaft (128; 228), and a pawl (78) engagable with the detents (54; 154).

11. A visor assembly (10; 110) according to any of claims 3 to 10 wherein the support (18; 118; 218) comprises a pair of adhesive members (22; 122; 222), the pair of adhesive members (22; 122; 222) preferably comprising a pair of suction cups (22; 122; 222).

12. A visor assembly (10; 110) according to claim 11 wherein the pair of adhesive members (22; 122; 222) are disposed substantially orthogonally to one another, the pair of adhesive members (22; 122; 222) preferably comprising a pair of suction cups (22; 122; 222), which are adapted to be removably secured about an edge of the monitor (16).

13. A visor assembly (10; 110) according to any preceding claim wherein the visor panel (12; 112) is concave in form.

14. A visor assembly (110) according to any preceding claim wherein the visor panel (112) comprises a tray (64).

15. A visor assembly (110) according to claim 14 wherein the tray (64) comprises at least one well (68) for receiving a writing implement.

16. A visor assembly (110) according to any preceding claim wherein the visor panel (112) comprises retaining means (60, 62) for securing stationary to the visor panel (112).

17. A visor assembly (10; 110) according to any of claims 3 to 15 wherein the at least one adhesive member (22; 122; 222), which is preferably a suction cup (22; 122; 222), is substantially transparent or translucent.
